# FASCICULE DE BREVET EUROPEEN

(11) **EP 1 464 576 B1**
(45) Date de publication et mention de la délivrance du brevet: **31.10.2018**
(21) Numéro de dépôt: 04290343.5
(22) Date de dépôt: 10.02.2004
(51) Int. Cl.: B64D 45/04, G08G 5/02

(54) **Procédé et dispositif d'aide au pilotage d'un aéronef pendant l'atterrissage**
Verfahren und Einrichtung zur Steuerungshilfe eines Flugzeugs während der Landung
Method and device for aiding piloting of an aircraft when landing

(30) Priorité: 19.03.2003 FR 0303333
(43) Date de publication de la demande: 06.10.2004
(73) Titulaire: AIRBUS OPERATIONS (SAS), 31060 Toulouse (FR)
(72) Inventeur: Peyrucain, Eric, 31180 Saint Genies Bellevue (FR); Rouquette, Patrice, 12740 la Loubiere (FR); Jourdan, Christophe, 31400 Toulouse (FR)
(74) Mandataire: Gevers & Orès

(56) Documents cités:
- WO-A-02/25213
- US-A- 5 583 774
- US-A- 5 661 486
- US-A- 5 969 672
- US-A- 6 094 607
- US-A- 6 112 141
- VIRBALL V G ET AL: "A GPS integrity channel based fault detection and exclusion algorithm using maximum solution separation" 1994, POSITION LOCATION AND NAVIGATION SYMPOSIUM, 1994., IEEE LAS VEGAS, NV, USA 11-15 APRIL 1994, NEW YORK, NY, USA,IEEE, PAGE(S) 747-754 , XP010117801 ISBN: 0-7803-1435-2 * le document en entier *

## Description

La présente invention concerne un procédé et un dispositif d'aide au pilotage d'un aéronef,en particulier un avion de transport civil, lors d'une approche de non précision pendant une phase d'atterrissage de cet aéronef.

Dans le cadre de la présente invention, on entend par "approche de non précision" (en anglais "non précision approach") une approche qui n'est pas une approche de précision aux instruments, telle que par exemple une approche de type ILS ("Instrument Landing System"). On sait que, pour mettre en oeuvre une approche de précision aux instruments, on utilise des stations sol qui sont situées en bordure de piste et au moins un récepteur radio spécialisé monté à bord de l'aéronef, qui fournit un guidage horizontal et vertical avant et pendant l'atterrissage en présentant au pilote la déviation latérale par rapport à un axe d'approche et la déviation verticale par rapport à un plan de descente. Une telle approche de précision aux instruments apporte une assistance importante et efficace à l'atterrissage (par un guidage latéral et un guidage vertical), en particulier par mauvaise visibilité (brouillard, ...) ou en absence de visibilité.

Une approche de non précision, telle que considérée dans la présente invention, existe donc lorsque les informations précédentes ne sont pas disponibles, tout au moins en partie, de sorte qu'une approche de précision usuelle ne peut pas être mise en oeuvre.

Lors d'une telle approche de non précision, le pilote de l'aéronef doit recueillir une pluralité d'informations relatives aux performances d'équipements de navigation (calculateurs, ...) de l'aéronef et à l'intégrité et à la précision de mesures de paramètres particuliers, tels que la position et l'altitude de l'aéronef par exemple. Le pilote doit synthétiser mentalement toutes ces informations et choisir, pour l'atterrissage, entre :
- l'un d'une pluralité de modes d'approche assistés possibles, pour lesquels l'aéronef est muni de moyens connus permettant :
   - de déterminer un axe d'approche virtuel, notamment à partir d'informations contenues dans une base de données embarquée à bord de l'aéronef ;
   - de calculer les déviations latérale et verticale de la position de l'aéronef par rapport à cet axe d'approche virtuel ; et
   - de présenter ces déviations au pilote.
      L'aéronef est alors piloté de manière à annuler ces déviations ; et
- un mode d'approche sélecté, pour lequel le pilote entre des consignes de descente (pente, cap, ...) dans un pilote automatique qui réalise le pilotage de l'aéronef.

Toutefois, cette synthèse mentale obligatoire des différentes informations accroît la charge de travail du pilote et constitue une perte de temps importante, alors que le pilote doit déjà effectuer à ce moment de nombreuses tâches en vue de l'atterrissage (gestion des communications avec le contrôle aérien, ...).

En outre, l'interface homme/machine est différente dans les modes d'approche d'une approche aux instruments et les modes d'approche d'une approche de non précision, ce qui présente en particulier l'inconvénient de rendre complexe l'ergonomie du poste de pilotage.

WO 02/25213 A divulgue un procédé d'aide au pilotage d'un aéronef lors d'une approche pendant une phase d'atterrissage, où une liste d'options d'approches est préparée par le dispositif pour affichage au pilote, le pilote a la possibilité de sélectionner la catégorie d'approche parmi les options d'approche proposées par le dispositif d'aide comme une approche de précision ou une approche de non précision à l'aide de l'affichage dans le cockpit, les détails de l'approche sont affichés lorsque le pilote a opéré la sélection. US 6 094 607 A divulgue un dispositif d'approche pour un aéronef où l'intégrité des données liées à la navigation est prise en compte lors de l'atterrissage.

La présente invention a pour objet de remédier à ces inconvénients. Elle concerne un procédé d'aide au pilotage d'un aéronef lors d'une approche de non précision pendant une phase d'atterrissage.

A cet effet, selon l'invention, ledit procédé est remarquable en ce que l'on réalise, de façon itérative et automatique, la suite d'étapes successives suivante :
a) on vérifie une pluralité de conditions relatives au moins à la validité d'une pluralité d'équipements de l'aéronef, ainsi qu'à l'intégrité et à la précision de mesures de paramètres particuliers, des informations issues desdits équipements et lesdites mesures pouvant être utilisées pour la mise en oeuvre de ladite approche de non précision ;
b) à partir desdites conditions vérifiées, on sélectionne une catégorie d'approche appropriée, parmi une pluralité de catégories d'approche différentes ; et
c) on présente la catégorie d'approche ainsi sélectionnée sur un écran de visualisation.

Une catégorie d'approche est une information synthétique permettant au pilote d'apprécier l'intégrité, la précision et la disponibilité des informations et des mesures qui lui sont fournies par les équipements de bord lors de l'atterrissage. Chaque catégorie d'approche définit le ou les modes d'approche qui sont possibles parmi les différents modes d'approche assistés, précisés ci-dessus, lors d'un atterrissage de non précision.

Par conséquent, le degré de confiance que peut avoir le pilote dans les informations qui lui sont fournies, varie en fonction de la catégorie d'approche effective déterminée grâce à l'invention. D'un point de vue opérationnel, pour les catégories d'approche relatives à une intégrité, une précision ou une disponibilité réduite, le pilote doit pallier le manque d'intégrité, de précision ou de disponibilité par des actions supplémentaires de vérification de données.

De façon avantageuse, les conditions vérifiées à l'étape a) comprennent au moins certaines des conditions suivantes :
- la validité de chacun de deux calculateurs de gestion de vol de l'aéronef ;
- la validité d'une fonction de positionnement par satellites de chacun de deux récepteurs multimodes d'aide à l'atterrissage de l'aéronef ;
- la validité d'une fonction de mode d'approche assisté de chacun de deux récepteurs multimodes d'aide à l'atterrissage de l'aéronef ;
- la validité de chacun de deux récepteurs multimodes d'aide à l'atterrissage de l'aéronef ;
- la validité de chacune de trois centrales de référence inertielle de l'aéronef, intégrant des données aérodynamiques ;
- la validité d'un directeur de vol de l'aéronef ;
- l'intégrité et la précision d'une valeur de position de l'aéronef ;
- l'incertitude concernant cette valeur de position de l'aéronef ;
- la cohérence entre une position de l'aéronef, calculée par un calculateur de gestion de vol de l'aéronef, et une position de l'aéronef, reçue d'un système de positionnement par satellites ;
- la précision d'une valeur d'altitude de l'aéronef ; et éventuellement
- la validité d'un pilote automatique de l'aéronef.

Par ailleurs, avantageusement, on détermine à l'étape b) une première catégorie d'approche, lorsque les conditions suivantes sont vérifiées simultanément :
- deux calculateurs de gestion de vol de l'aéronef, sont valides ;
- des fonctions de positionnement par satellites de deux récepteurs multimodes d'aide à l'atterrissage de l'aéronef, sont valides ;
- au moins deux centrales de référence inertielle de l'aéronef, intégrant des données aérodynamiques, sont valides ;
- au moins une fonction de mode d'approche assisté d'un récepteur multimode d'aide à l'atterrissage de l'aéronef, est valide ;
- une valeur d'altitude de l'aéronef présente une précision qui est supérieure à une valeur prédéterminée ;
- l'intégrité et la précision d'une valeur de position de l'aéronef sont réalisées ; et
- une position de l'aéronef, calculée par un calculateur de gestion de vol de l'aéronef, et une position de l'aéronef, reçue d'un système de positionnement par satellites, sont cohérentes.

De plus de façon avantageuse, on déterminé à l'étape b) une deuxième catégorie d'approche, lorsque les conditions suivantes sont vérifiées simultanément :
- au moins un calculateur de gestion de vol de l'aéronef, est valide ;
- au moins une centrale de référence inertielle de l'aéronef, intégrant des données aérodynamiques, est valide ;
- au moins une fonction de mode d'approche assisté d'un récepteur multimode d'aide à l'atterrissage de l'aéronef, est valide ; et
- une valeur de position de l'aéronef présente une incertitude faible.

En outre, avantageusement, on détermine à l'étape b) une troisième catégorie d'approche, lorsque les conditions suivantes sont vérifiées simultanément :
- au moins un calculateur de gestion de vol de l'aéronef, est valide ;
- au moins une centrale de référence inertielle de l'aéronef, intégrant des données aérodynamiques, est valide ;
- au moins une fonction de mode d'approche assisté d'un récepteur multimode d'aide à l'atterrissage de l'aéronef, est valide ; et
- une valeur de position de l'aéronef présente une incertitude élevée.

De plus, de façon avantageuse, on détermine à l'étape b) une quatrième catégorie d'approche, lorsqu'au moins l'une des conditions A, B, C et D suivantes est vérifiée :
A/ deux calculateurs de gestion de vol de l'aéronef, sont invalides ;
B/ deux récepteurs multimodes d'aide à l'atterrissage de l'aéronef, sont invalides ;
C/ trois centrales de référence inertielle de l'aéronef, intégrant des données aérodynamiques, sont invalides ;
D/ des fonctions de mode d'approche assisté de deux récepteurs multimodes d'aide à l'atterrissage de l'aéronef, sont invalides.

La présente invention concerne également un dispositif d'aide au pilotage d'un aéronef lors d'une approche de non précision pendant une phase d'atterrissage.

Selon l'invention, ce dispositif est remarquable en ce qu'il comporte :
- des premiers moyens pour vérifier une pluralité de conditions relatives au moins à la validité d'une pluralité d'équipements de l'aéronef, ainsi qu'à l'intégrité et à la précision de mesures de paramètres particuliers, des informations issues desdits équipements et lesdites mesures pouvant être utilisées pour la mise en oeuvre de ladite approche de non précision ;
- des seconds moyens pour sélectionner, à partir desdites conditions vérifiées, une catégorie d'approche appropriée, parmi une pluralité de catégories d'approche différentes ; et
- des moyens d'affichage pour présenter, sur un écran de visualisation de l'aéronef, la catégorie d'approche sélectionnée par lesdits seconds moyens.

Dans un mode de réalisation particulier, ledit écran de visualisation est un écran primaire de pilotage de l'aéronef, et lesdits moyens d'affichage présentent ladite catégorie d'approche sur une zone dudit écran primaire de pilotage, qui est utilisée de façon usuelle pour l'affichage d'une catégorie d'approche lors d'une approche aux instruments.

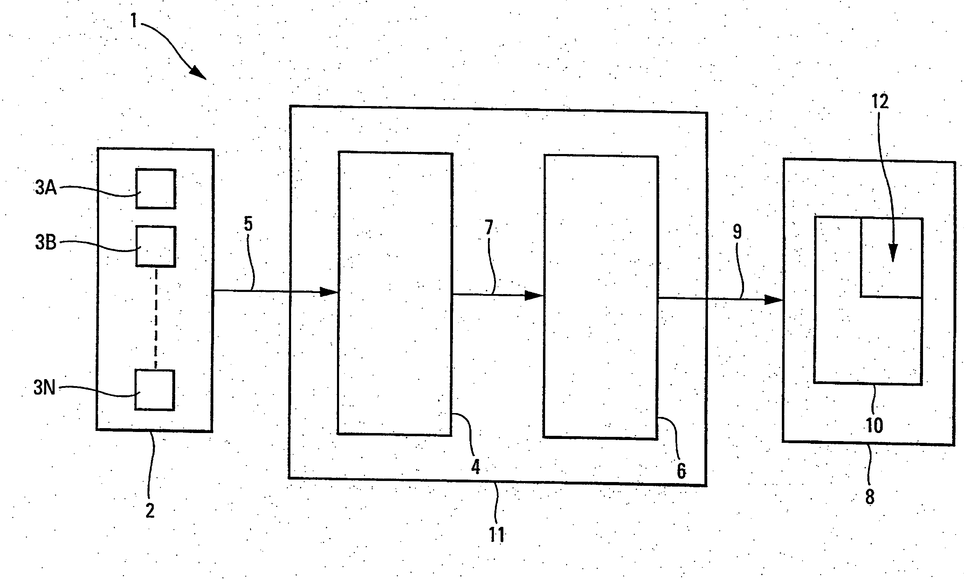

L'objet de l'invention, un procédé et un dispositif d'aide au pilotage d'un aéronef lors d'une approche de non précision pendant une phase d'atterrissage, est exposé tel qu'il est caractérisé dans les revendications 1 et 3. L'unique figure du dessin annexé fera bien comprendre comment l'invention peut être réalisée: Cette figure est le schéma synoptique d'un dispositif conforme à l'invention.

Le dispositif 1 conforme à l'invention est destiné à aider le pilote d'un aéronef, en particulier d'un avion de transport civil, pendant une phase d'atterrissage de l'aéronef dans le cas d'une approche de non précision.

Selon l'invention, ledit dispositif 1 qui est embarqué sur l'aéronef (non représenté) comporte :
un ensemble 2 de sources d'informations 3A, 3B, ..., 3N comprenant notamment différents équipements (calculateurs, instruments de mesure ...) de l'aéronef, précisés ci-dessous ;
- des moyens 4 qui sont reliés par une liaison 5 à l'ensemble 2 de sources d'informations et qui sont destinés à vérifier une pluralité de conditions relatives au moins à la validité d'une pluralité desdits équipements 3A, ..., 3N de l'aéronef, ainsi qu'à l'intégrité et à la précision de mesures de paramètres particuliers, réalisées par certains de ces équipements 3A à 3N ;
- des moyens 6, par exemple un calculateur de type FG ("Flight Guidance"), qui sont reliés par une liaison 7 auxdits moyens 4 et qui sont destinés à sélectionner à partir des vérifications réalisées par lesdits moyens 4, une catégorie d'approche appropriée, parmi une pluralité de catégories d'approche différentes ; et
- des moyens d'affichage 8 qui sont reliés par une liaison 9 aux moyens 6 et qui sont destinés à présenter, sur un écran de visualisation 10, la catégorie d'approche sélectionnée par lesdits moyens 6.

De préférence, lesdits moyens 4 et 6 sont intégrés dans une seule et même unité de calcul 11.

Par ailleurs, dans un mode de réalisation particulier, ledit écran de visualisation 10 est un écran primaire de pilotage usuel de l'aéronef, de type PFD ("Primary Flight Display"), et lesdits moyens d'affichage 8 présentent ladite catégorie d'approche sur une zone 12 dudit écran primaire de pilotage 10, qui est utilisée de façon usuelle pour l'affichage d'une catégorie d'approche lors d'une approche usuelle aux instruments.

Ce mode de réalisation particulier présente l'avantage de permettre une amélioration de l'ergonomie pour le pilote, puisque ce dernier dispose ainsi d'une information de catégorie d'approche au même emplacement (zone 12) que lors d'une approche de précision aux instruments.

La présente invention s'applique plus particulièrement à un aéronef qui comporte notamment les sources d'informations suivantes faisant partie dudit ensemble 2 :
- deux calculateurs de gestion de vol, de préférence de type FMS ("Flight Management System") ;
- deux récepteurs multimodes d'aide à l'atterrissage, de préférence de type MMR ("Multi Mode Receiver"), qui comportent chacun :
   - une fonction de mode d'approche assisté FLS, précisée ci-dessous ; et
   - une fonction de positionnement par satellites en liaison avec un système de type GPS ("Global Positioning System") ;
- trois centrales de référence inertielle intégrant des données aérodynamiques, de type ADIRS ("Air Data Inertial Reference System") ;
- un pilote automatique ; et
- un directeur de vol, qui est surtout utile lorsque le pilote automatique n'est pas engagé, c'est-à-dire en pilotage manuel, et qui affiche alors des informations d'aide au pilotage sur l'écran primaire de pilotage PFD.

Dans un mode de réalisation préféré, lesdits moyens 4 vérifient les conditions suivantes :
C1/ la validité de chacun des deux calculateurs de gestion de vol FMS ;
C2/ la validité de la fonction de positionnement par satellites GPS de chacun des deux récepteurs multimodes d'aide à l'atterrissage MMR ;
C3/ la validité de la fonction de mode d'approche assisté FLS de chacun des deux récepteurs multimodes d'aide à l'atterrissage MMR ;
C4/ la validité de chacun desdits deux récepteurs multimodes d'aide à l'atterrissage MMR ;
C5/ la validité de chacune des trois centrales ADIRS de référence inertielle intégrant des données aérodynamiques ;
C6/ la validité du directeur de vol ;
C7/ l'intégrité et la précision d'une valeur de position de l'aéronef ;
C8/ l'incertitude concernant cette valeur de position de l'aéronef ;
C9/ la cohérence entre une position de l'aéronef, calculée par un calculateur de gestion de vol FMS de l'aéronef, et une position de l'aéronef, reçue d'un système GPS de positionnement par satellites ;
C10/ la précision d'une valeur d'altitude de l'aéronef ; et éventuellement
C11/ la validité du pilote automatique.

En ce qui concerne la condition C7, dans un mode de réalisation particulier, le calculateur de gestion de vol FMS calcule la position de l'aéronef à partir de valeurs fournies par des capteurs usuels (ADIRS, GPS, VOR, DME). De plus, il surveille l'intégrité et la précision de cette valeur de position. Ledit calculateur de gestion de vol FMS peut calculer la position de l'avion de différentes façons correspondant à différents modes de navigation connus : "IRS/GPS", "IRS/DME/DME", "IRS/VOR/DME" et "IRS Only", cités par ordre de précision décroissante.

En plus du calcul de la valeur de position, le calculateur FMS effectue une estimation de l'incertitude concernant cette valeur de position. Cette incertitude peut être faible ou élevée (condition C8).

Pour vérifier la condition C9, les moyens 4 peuvent comporter un calculateur d'alerte, de type FWC ("Flight Warning Computer"), qui calcule la différence entre les deux positions, compare cette différence à une valeur prédéterminée, et en déduit que les deux positions sont cohérentes uniquement lorsque ladite différence est inférieure à ladite valeur prédéterminée.

Par ailleurs, concernant la condition C10 :
- dans une première variante, on calcule la différence entre les valeurs d'altitude fournies par les deux sous-calculateurs usuels FMS1et FMS2 du calculateur FMS ; et
- dans une seconde variante, on calcule la différence entre les valeurs d'altitudes fournies, d'une part, par le calculateur FMS (FMS1 ou FMS2 ou les deux) et, d'autre part, par un équipement (GPS, ADIRS, radioaltimètre) qui est indépendant du calculateur FMS.

Dans les deux cas précédents, on compare cette différence à une valeur prédéterminée, et on déduit que la valeur d'altitude est précise uniquement lorsque cette différence est inférieure à ladite valeur prédéterminée.

Dans le cadre de la présente invention, une catégorie d'approche est une information synthétique permettant au pilote d'apprécier l'intégrité, la précision et la disponibilité des informations et des mesures qui lui sont fournies par les équipements de bord lors de l'atterrissage. Chaque catégorie d'approche définit le ou les modes d'approche qui sont possibles parmi les différents modes d'approche assistés, précisés ci-dessous, lors d'un atterrissage de non précision.

Par conséquent, le degré de confiance que peut avoir le pilote dans les informations qui lui sont fournies, varie en fonction de la catégorie d'approche effective, déterminée grâce à l'invention. D'un point de vue opérationnel, pour les catégories d'approche relatives à une intégrité, une précision ou une disponibilité réduite, le pilote doit pallier le manque d'intégrité, de précision ou de disponibilité par des actions supplémentaires de vérification de données.

Ainsi, en fonction de la catégorie d'approche qui lui est présentée (conformément à la présente invention) sur l'écran de visualisation 10, le pilote choisit, pour l'atterrissage, entre :
- l'un d'une pluralité de modes d'approche assistés possibles (susceptibles d'être mis en oeuvre par une fonction de mode d'approche assisté FLS), pour lesquels :
   - on détermine un axe d'approche virtuel, notamment à l'aide d'informations contenues dans une base de données (non représentée) embarquée sur l'aéronef ;
   - on calcule les déviations latérale et verticale de la position de l'aéronef par rapport à cet axe d'approche virtuel ; et
   - on présente ces déviations au pilote.
      L'aéronef est alors piloté de manière à annuler ces déviations ; et
- un mode d'approche sélecté, pour lequel le pilote entre des consignes de descente (pente, cap, ...) dans un pilote automatique qui réalise le pilotage del'aéronef.

Dans un mode de réalisation préféré, les moyens 6 déterminent une première catégorie d'approche dite "F-APP", lorsque les conditions suivantes sont vérifiées simultanément :
- les deux calculateurs de gestion de vol FMS, sont valides ;
- les fonctions GPS de positionnement par satellites des deux récepteurs multimodes d'aide à l'atterrissage MMR, sont valides ;
- au moins deux centrales ADIRS de référence inertielle, intégrant des données aérodynamiques, sont valides ;
- au moins la fonction de mode d'approche assisté FLS d'un récepteur multimode d'aide à l'atterrissage MMR, est valide ;
- la valeur d'altitude de l'aéronef présente une précision qui est supérieure à une valeur prédéterminée ;
- l'intégrité et la précision d'une valeur de position de l'aéronef sont réalisées ; et
- une position de l'aéronef, calculée par un calculateur de gestion de vol FMS de l'aéronef, et une position de l'aéronef, reçue d'un système GPS de positionnement par satellites, sont cohérentes.

Lorsque cette première catégorie "F-APP" est affichée sur l'écran de visualisation 10, le pilote peut choisir l'un quelconque des différents modes d'approche assistés possibles.

En outre, les moyens 6 déterminent une deuxième catégorie d'approche dite "F-APP + RAW", lorsque les conditions suivantes sont vérifiées simultanément :
- au moins un calculateur de gestion de vol FMS, est valide ;
- au moins une centrale ADIRS de référence inertielle intégrant des données aérodynamiques, est valide ;
- au moins la fonction de mode d'approche assisté FLS d'un récepteur multimode d'aide à l'atterrissage MMR, est valide ; et
- une valeur de position de l'aéronef présente une incertitude faible.

Lorsque la catégorie "F-APP + RAW" est affichée sur l'écran de visualisation 10, le pilote peut également choisir l'un quelconque des différents modes d'approche assistés, mais il doit vérifier la cohérence entre, d'une part, des informations fournies par les différents systèmes de l'aéronef et, d'autre part, des données de navigation telles que, par exemple, des positions de balises au sol, des points de route, ... Ces données de navigation sont parfois appelées "RAW data" et affichées sur un écran usuel de type "ND" ("Navigation Display").

Par ailleurs, les moyens 6 déterminent une troisième catégorie d'approche dite "RAW ONLY", lorsque les conditions suivantes sont vérifiées simultanément :
- au moins un calculateur de gestion de vol FMS de l'aéronef, est valide ;
- au moins une centrale de référence inertielle ADIRS de l'aéronef, intégrant des données aérodynamiques, est valide ;
- au moins la fonction de mode d'approche assisté FLS d'un récepteur multimode d'aide à l'atterrissage de l'aéronef, MMR est valide ; et
- une valeur de position de l'aéronef présente une incertitude élevée.

Lorsque la catégorie "RAW ONLY" est affichée, de préférence, le pilote ne doit pas utiliser les informations de déviations latérale et verticale par rapport à un axe d'approche virtuel, affichées dans le poste de pilotage, car il apparaît une perte de précision sur la valeur de position. Il doit dans ce cas utiliser, de préférence, lesdites données de navigation ("RAW data"). Par conséquent, il ne devrait pas choisir les modes d'approche assistés, qui font appel auxdites déviations précitées issues d'une fonction de mode d'approche assisté FLS, et il ne devrait donc choisir que ledit mode d'approche sélecté. S'il choisit néanmoins d'utiliser un mode d'approche assisté, il doit alors vérifier la validité des informations utilisées pour le guidage de l'aéronef.

Par ailleurs, lesdits moyens 6 peuvent également déterminer une quatrième catégorie d'approche, lorsqu'au moins l'une des conditions A, B, C et D suivantes est vérifiée :
A/les deux calculateurs de gestion de vol FMS de l'aéronef, sont invalides;
B/ les deux récepteurs multimodes d'aide à l'atterrissage MMR de l'aéronef, sont invalides ;
C/ les trois centrales de référence inertielle ADIRS de l'aéronef, intégrant des données aérodynamiques, sont invalides ;
D/ les fonctions de mode d'approche assisté FLS des deux récepteurs multimodes d'aide à l'atterrissage MMR de l'aéronef, sont invalides.

Avec cette quatrième catégorie d'approche, seul un mode d'approche sélecté peut être mis en oeuvre.

Le dispositif 1 conforme à l'invention permet donc de réduire la charge de travail du pilote en lui présentant de façon synthétique une information (catégorie d'approche sélectionnée) lui permettant de choisir immédiatement le mode d'approche qu'il va utiliser et la manière de le mettre en oeuvre.

Dans un mode de réalisation particulier, lorsque l'aéronef se trouve dans la première catégorie "F-APP",il rétrograde, selon l'invention :
- dans la deuxième catégorie "F-APP+ RAW", lorsque l'une des conditions suivantes est vérifiée :
   - un calculateur de gestion de vol FMS, est invalide ;
   - la fonction de positionnement par satellites d'un récepteur multimode d'aide à l'atterrissage MMR, est invalide ;
   - la valeur de position de l'aéronef présente un défaut d'intégrité et/ou de précision, et simultanément cette valeur de position de l'aéronef présente une incertitude faible ;
   - la valeur d'altitude est imprécise ;
   - les deux positions précitées (FMS, GPS) ne sont pas cohérentes ; et
- dans la troisième catégorie "RAW ONLY", lorsque la valeur de position de l'aéronef présente un défaut d'intégrité et/ou de précision, et simultanément cette valeur de position de l'aéronef présente une incertitude élevée.

Par ailleurs, lorsque l'aéronef se trouve dans la deuxième catégorie "F-APP+RAW", il rétrograde dans la troisième catégorie "RAW ONLY" lorsque l'incertitude concernant la position de l'aéronef devient élevée.

## Revendications

1. Procédé d'aide au pilotage d'un aéronef lors d'une approche de non précision pendant une phase d'atterrissage, procédé selon lequel on réalise, de façon itérative et automatique, la suite d'étapes successives suivante :
a) on réalise des vérifications pour une pluralité de conditions relatives au moins à la validité d'une pluralité d'équipements de l'aéronef, ainsi qu'à l'intégrité et à la précision de mesures de paramètres particuliers, des informations issues desdits équipements et lesdites mesures pouvant être utilisées pour la mise en oeuvre de ladite approche de non précision, lesdites conditions vérifiées comprenant au moins certaines des conditions suivantes :
• la validité de chacun de deux calculateurs de gestion de vol de l'aéronef ;
• la validité d'une fonction de positionnement par satellites de chacun de deux récepteurs multimodes d'aide à l'atterrissage de l'aéronef ;
• la validité d'une fonction de mode d'approche assisté de chacun de deux récepteurs multimodes d'aide à l'atterrissage de l'aéronef ;
• la validité de chacun de deux récepteurs multimodes d'aide à l'atterrissage de l'aéronef ;
• la validité de chacune de trois centrales de référence inertielle de l'aéronef, intégrant des données aérodynamiques ;
• la validité d'un directeur de vol de l'aéronef ;
• l'intégrité et la précision d'une valeur de position de l'aéronef ;
• l'incertitude concernant cette valeur de position de l'aéronef ;
• la cohérence entre une position de l'aéronef, calculée par un calculateur de gestion de vol de l'aéronef, et une position de l'aéronef, reçue d'un système de positionnement par satellites ; et
• la précision d'une valeur d'altitude de l'aéronef,
b) à partir des conditions qui sont vérifiées, on détermine une catégorie d'approche appropriée, qui est sélectionnée parmi une pluralité de catégories d'approche différentes, ladite pluralité de catégories d'approche différentes comprenant au moins certaines des catégories suivantes :
- une première catégorie d'approche, lorsque les conditions suivantes sont vérifiées simultanément :
• deux calculateurs de gestion de vol de l'aéronef, sont valides ;
• des fonctions de positionnement par satellites de deux récepteurs multimodes d'aide à l'atterrissage de l'aéronef, sont valides ;
• au moins deux centrales de référence inertielle de l'aéronef, intégrant des données aérodynamiques, sont valides ;
• au moins une fonction de mode d'approche assisté d'un récepteur multimode d'aide à l'atterrissage de l'aéronef, est valide ;
• une valeur d'altitude de l'aéronef présente une précision qui est supérieure à une valeur prédéterminée ;
• l'intégrité et la précision d'une valeur de position de l'aéronef, sont réalisées ; et
• une position de l'aéronef, calculée par un calculateur de gestion de vol de l'aéronef, et une position de l'aéronef, reçue d'un système de positionnement par satellites, sont cohérentes;
- une deuxième catégorie d'approche, lorsque les conditions suivantes sont vérifiées simultanément :
• au moins un calculateur de gestion de vol de l'aéronef, est valide ;
• au moins une centrale de référence inertielle de l'aéronef, intégrant des données aérodynamiques, est valide ;
• au moins une fonction de mode d'approche assisté d'un récepteur multimode d'aide à l'atterrissage de l'aéronef, est valide ; et
• une valeur de position de l'aéronef présente une incertitude faible ;
- une troisième catégorie d'approche, lorsque les conditions suivantes sont vérifiées simultanément :
• au moins un calculateur de gestion de vol de l'aéronef, est valide ;
• au moins une centrale de référence inertielle de l'aéronef, intégrant des données aérodynamiques, est valide ;
• au moins une fonction de mode d'approche assisté d'un récepteur multimode d'aide à l'atterrissage de l'aéronef, est valide ; et
• une valeur de position de l'aéronef présente une incertitude élevée ;
- une quatrième catégorie d'approche, lorsqu'au moins l'une des conditions A, B, C et D suivantes est vérifiée :
A/ deux calculateurs de gestion de vol de l'aéronef, sont invalides ;
B/ deux récepteurs multimodes d'aide à l'atterrissage de l'aéronef, sont invalides ;
C/ trois centrales de référence inertielle de l'aéronef, intégrant des données aérodynamiques, sont invalides ;
D/des fonctions de mode d'approche assisté de deux récepteurs multimodes d'aide à l'atterrissage de l'aéronef, sont invalides ; et
c) on présente la catégorie d'approche ainsi sélectionnée sur un écran de visualisation (10), une catégorie d'approche définissant les modes d'approche possibles.

2. Procédé selon la revendication 1,
**caractérisé en ce que** les conditions vérifiées à l'étape a) comprennent de plus la validité d'un pilote automatique de l'aéronef.

3. Dispositif d'aide au pilotage d'un aéronef lors d'une approche de non précision pendant une phase d'atterrissage, ledit dispositif (1) comportant :
- des premiers moyens (4) pour réaliser des vérifications pour une pluralité de conditions relatives au moins à la validité d'une pluralité d'équipements de l'aéronef, ainsi qu'à l'intégrité et à la précision de mesures de paramètres particuliers, des informations issues desdits équipements et lesdites mesures pouvant être utilisées pour la mise en oeuvre de ladite approche de non précision, lesdites conditions vérifiées comprenant au moins certaines des conditions suivantes :
• la validité de chacun de deux calculateurs de gestion de vol de l'aéronef ;
• la validité d'une fonction de positionnement par satellites de chacun de deux récepteurs multimodes d'aide à l'atterrissage de l'aéronef ;
• la validité d'une fonction de mode d'approche assisté de chacun de deux récepteurs multimodes d'aide à l'atterrissage de l'aéronef ;
• la validité de chacun de deux récepteurs multimodes d'aide à l'atterrissage de l'aéronef ;
• la validité de chacune de trois centrales de référence inertielle de l'aéronef, intégrant des données aérodynamiques ;
• la validité d'un directeur de vol de l'aéronef ;
• l'intégrité et la précision d'une valeur de position de l'aéronef ;
• l'incertitude concernant cette valeur de position de l'aéronef ;
• la cohérence entre une position de l'aéronef, calculée par un calculateur de gestion de vol de l'aéronef, et une position de l'aéronef, reçue d'un système de positionnement par satellites ; et
• la précision d'une valeur d'altitude de l'aéronef,
- des seconds moyens (6) pour déterminer, à partir des conditions qui sont vérifiées, une catégorie d'approche appropriée, qui est sélectionnée parmi une pluralité de catégories d'approche différentes, ladite pluralité de catégories d'approche différentes comprenant au moins certaines des catégories suivantes :
- une première catégorie d'approche, lorsque les conditions suivantes sont vérifiées simultanément :
• deux calculateurs de gestion de vol de l'aéronef, sont valides ;
• des fonctions de positionnement par satellites de deux récepteurs multimodes d'aide à l'atterrissage de l'aéronef, sont valides ;
• au moins deux centrales de référence inertielle de l'aéronef, intégrant des données aérodynamiques, sont valides ;
• au moins une fonction de mode d'approche assisté d'un récepteur multimode d'aide à l'atterrissage de l'aéronef, est valide ;
• une valeur d'altitude de l'aéronef présente une précision qui est supérieure à une valeur prédéterminée ;
• l'intégrité et la précision d'une valeur de position de l'aéronef, sont réalisées ; et
• une position de l'aéronef, calculée par un calculateur de gestion de vol de l'aéronef, et une position de l'aéronef, reçue d'un système de positionnement par satellites, sont cohérentes;
- une deuxième catégorie d'approche, lorsque les conditions suivantes sont vérifiées simultanément :
• au moins un calculateur de gestion de vol de l'aéronef, est valide ;
• au moins une centrale de référence inertielle de l'aéronef, intégrant des données aérodynamiques, est valide ;
• au moins une fonction de mode d'approche assisté d'un récepteur multimode d'aide à l'atterrissage de l'aéronef, est valide ; et
• une valeur de position de l'aéronef présente une incertitude faible ;
- une troisième catégorie d'approche, lorsque les conditions suivantes sont vérifiées simultanément :
• au moins un calculateur de gestion de vol de l'aéronef, est valide ;
• au moins une centrale de référence inertielle de l'aéronef, intégrant des données aérodynamiques, est valide ;
• au moins une fonction de mode d'approche assisté d'un récepteur multimode d'aide à l'atterrissage de l'aéronef, est valide ; et
• une valeur de position de l'aéronef présente une incertitude élevée ;
- une quatrième catégorie d'approche, lorsqu'au moins l'une des conditions A, B, C et D suivantes est vérifiée :
A/ deux calculateurs de gestion de vol de l'aéronef, sont invalides ;
B/ deux récepteurs multimodes d'aide à l'atterrissage de l'aéronef, sont invalides ;
C/ trois centrales de référence inertielle de l'aéronef, intégrant des données aérodynamiques, sont invalides ;
D/ des fonctions de mode d'approche assisté de deux récepteurs multimodes d'aide à l'atterrissage de l'aéronef, sont invalides ; et
- des moyens d'affichage (8) pour présenter, sur un écran de visualisation (10) de l'aéronef, la catégorie d'approche sélectionnée par lesdits seconds moyens (6), une catégorie d'approche définissant les modes d'approche possibles.

4. Dispositif selon la revendication 3,
**caractérisé en ce que** ledit écran de visualisation (10) est un écran primaire de pilotage de l'aéronef, et **en ce que** lesdits moyens d'affichage (8) présentent ladite catégorie d'approche sur une zone (12) dudit écran primaire de pilotage (10), qui est utilisée pour l'affichage d'une catégorie d'approche lors d'une approche aux instruments.

5. Aéronef,
**caractérisé en ce qu'**il comporte un dispositif susceptible de mettre en oeuvre le procédé spécifié sous l'une quelconque des revendications 1 et 2.

## Patentansprüche

1. Verfahren zur Steuerungshilfe eines Luftfahrzeugs bei einem Nicht-Präzisionsanflug während einer Landephase, Verfahren, bei dem auf iterative und automatische Weise die folgende Reihe aufeinanderfolgender Schritte durchgeführt wird:
a) Durchführen von Überprüfungen für eine Vielzahl von Bedingungen, die sich mindestens auf die Gültigkeit einer Vielzahl von Ausrüstungen des Luftfahrzeugs sowie auf die Vollständigkeit und die Genauigkeit von Messungen von einzelnen Parametern beziehen, wobei Informationen, die von diesen Ausrüstungen und diesen Messungen stammen, für die Ausführung des Nicht-Präzisionsanflugs verwendet werden können, wobei diese überprüften Bedingungen mindestens gewisse der folgenden Bedingungen umfassen:
• die Gültigkeit jedes der beiden Flugmanagementrechner des Luftfahrzeugs;
• die Gültigkeit einer Satelliten-Positionierungsfunktion von jedem der beiden Multi-Modus-Empfänger zur Hilfe bei der Landung des Luftfahrzeugs;
• die Gültigkeit einer Funktion des unterstützten Anflugmodus von jedem der beiden Multi-Modus-Empfänger zur Hilfe bei der Landung des Luftfahrzeugs;
• die Gültigkeit von jedem der beiden Muti-Modus-Empfänger zur Hilfe bei der Landung des Luftfahrzeugs;
• die Gültigkeit von jeder der drei Trägheits-Referenzzentralen des Luftfahrzeugs, unter Einbezug von aerodynamischen Daten;
• die Gültigkeit eines Flight Directors des Luftfahrzeugs;
• die Vollständigkeit und die Genauigkeit eines Positionswerts des Luftfahrzeugs;
• die Unsicherheit bezüglich dieses Positionswerts des Luftfahrzeugs;
• die Kohärenz zwischen einer durch einen Flugmanagementrechner des Luftfahrzeugs berechneten Position des Luftfahrzeugs und einer von einem Satelliten-Positionierungssystem erhaltenen Position des Luftfahrzeugs; und
• die Genauigkeit eines Höhenwerts des Luftfahrzeugs,
b) ausgehend von den Bedingungen, die überprüft werden, Bestimmen einer geeigneten Anflugkategorie, die aus einer Vielzahl von unterschiedlichen Anflugkategorien ausgewählt ist, wobei die Vielzahl von unterschiedlichen Anflugkategorien mindestens gewisse der folgenden Kategorien umfassen:
- eine erste Anflugkategorie, wenn die folgenden Bedingungen gleichzeitig überprüft werden:
• zwei Flugmanagementrechner des Luftfahrzeugs, sind gültig;
• Satelliten-Positionierungsfunktionen von zwei Multi-Modus-Empfängern zur Hilfe bei der Landung des Luftfahrzeugs, sind gültig;
• mindestens zwei Trägheits-Referenzzentralen des Luftfahrzeugs, unter Einbezug von aerodynamischen Daten, sind gültig;
• mindestens eine Funktion des unterstützten Anflugmodus eines Multi-Modus-Empfängers zur Hilfe bei der Landung des Luftfahrzeugs, ist gültig;
• ein Höhenwert des Luftfahrzeugs weist eine Genauigkeit auf, die höher ist als ein vorbestimmter Wert;
• die Vollständigkeit und die Genauigkeit eines Positionswerts des Luftfahrzeugs werden erfüllt; und
• eine durch einen Flugmanagementrechner des Luftfahrzeugs berechnete Position des Luftfahrzeugs und eine von einem Satelliten-Positionierungssystem empfangene Position des Luftfahrzeugs, sind kohärent;
- eine zweite Anflugkategorie, wenn die folgenden Bedingungen gleichzeitig überprüft werden:
• mindestens ein Flugmanagementrechner des Luftfahrzeugs, ist gültig;
• mindestens eine Trägheits-Referenzzentrale des Luftfahrzeugs, unter Einbezug von aerodynamischen Daten, ist gültig;
• mindestens eine Funktion des unterstützten Anflugmodus eines Multi-Modus-Empfängers zur Hilfe bei der Landung des Luftfahrzeugs, ist gültig; und
• ein Positionswert des Luftfahrzeugs weist eine niedrige Unsicherheit auf;
- eine dritte Anflugkategorie, wenn die folgenden Bedingungen gleichzeitig überprüft werden:
• mindestens ein Flugmanagementrechner des Luftfahrzeugs, ist gültig;
• mindestens eine Trägheits-Referenzzentrale des Luftfahrzeugs, unter Einbezug von aerodynamischen Daten, ist gültig;
• mindestens eine Funktion des unterstützten Anflugmodus eines Multi-Modus-Empfängers zur Hilfe bei der Landung des Luftfahrzeugs, ist gültig; und
• ein Positionswert des Luftfahrzeugs weist eine hohe Unsicherheit auf;
- eine vierte Anflugkategorie, wenn mindestens eine der folgenden Bedingungen A, B, C und D überprüft wird:
A/ zwei Flugmanagementrechner des Luftfahrzeugs, sind ungültig;
B/ zwei Multi-Modus-Empfänger zur Hilfe bei der Landung des Luftfahrzeugs, sind ungültig;
C/ drei Trägheits-Referenzzentralen des Luftfahrzeugs, unter Einbezug von aerodynamischen Daten, sind ungültig;
D/ Funktionen des unterstützten Anflugmodus von zwei Multi-Modus-Empfängern zur Hilfe bei der Landung des Luftfahrzeugs, sind ungültig; und
c) Darstellung der so ausgewählten Anflugkategorie auf einem Anzeigebildschirm (10), wobei eine Anflugkategorie die möglichen Anflugmodi definiert.

2. Verfahren nach Anspruch 1,
**dadurch gekennzeichnet, dass** die in Schritt a) überprüften Bedingungen weiter die Gültigkeit eines Autopiloten des Luftfahrzeugs umfassen.

3. Vorrichtung zur Steuerungshilfe eines Luftfahrzeugs bei einem Nicht-Präzisionsanflug während einer Landephase, wobei die Vorrichtung (1) aufweist:
- erste Mittel (4) zum Durchführen von Überprüfungen für eine Vielzahl von Bedingungen, die sich mindestens auf die Gültigkeit einer Vielzahl von Ausrüstungen des Luftfahrzeugs sowie auf die Vollständigkeit und die Genauigkeit von Messungen von einzelnen Parametern beziehen, wobei Informationen, die von diesen Ausrüstungen und diesen Messungen stammen, für die Ausführung des Nicht-Präzisionsanflugs verwendet werden können, wobei diese überprüften Bedingungen mindestens gewisse der folgenden Bedingungen umfassen:
• die Gültigkeit jedes der beiden Flugmanagementrechner des Luftfahrzeugs;
• die Gültigkeit einer Satelliten-Positionierungsfunktion von jedem der beiden Multi-Modus-Empfänger zur Hilfe bei der Landung des Luftfahrzeugs;
• die Gültigkeit einer Funktion des unterstützten Anflugmodus von jedem der beiden Multi-Modus-Empfänger zur Hilfe bei der Landung des Luftfahrzeugs;
• die Gültigkeit von jedem der beiden Muti-Modus-Empfänger zur Hilfe bei der Landung des Luftfahrzeugs;
• die Gültigkeit von jeder der drei Trägheits-Referenzzentralen des Luftfahrzeugs, unter Einbezug von aerodynamischen Daten;
• die Gültigkeit eines Flight Directors des Luftfahrzeugs;
• die Vollständigkeit und die Genauigkeit eines Positionswerts des Luftfahrzeugs;
• die Unsicherheit bezüglich dieses Positionswerts des Luftfahrzeugs;
• die Kohärenz zwischen einer durch einen Flugmanagementrechner des Luftfahrzeugs berechneten Position des Luftfahrzeugs und einer von einem Satelliten-Positionierungssystem erhaltenen Position des Luftfahrzeugs; und
• die Genauigkeit eines Höhenwerts des Luftfahrzeugs,
- zweite Mittel (6), um ausgehend von den Bedingungen, die überprüft werden, eine geeignete Anflugkategorie zu bestimmen, die aus einer Vielzahl von unterschiedlichen Anflugkategorien ausgewählt ist, wobei die Vielzahl von unterschiedlichen Anflugkategorien mindestens gewisse der folgenden Kategorien umfassen:
- eine erste Anflugkategorie, wenn die folgenden Bedingungen gleichzeitig überprüft werden:
• zwei Flugmanagementrechner des Luftfahrzeugs, sind gültig;
• Satelliten-Positionierungsfunktionen von zwei Multi-Modus-Empfängern zur Hilfe bei der Landung des Luftfahrzeugs, sind gültig;
• mindestens zwei Trägheits-Referenzzentralen des Luftfahrzeugs, unter Einbezug von aerodynamischen Daten, sind gültig;
• mindestens eine Funktion des unterstützten Anflugmodus eines Multi-Modus-Empfängers zur Hilfe bei der Landung des Luftfahrzeugs, ist gültig;
• ein Höhenwert des Luftfahrzeugs weist eine Genauigkeit auf, die höher ist als ein vorbestimmter Wert;
• die Vollständigkeit und die Genauigkeit eines Positionswerts des Luftfahrzeugs werden erfüllt; und
• eine durch einen Flugmanagementrechner des Luftfahrzeugs berechnete Position des Luftfahrzeugs und eine von einem Satelliten-Positionierungssystem empfangene Position des Luftfahrzeugs, sind kohärent;
- eine zweite Anflugkategorie, wenn die folgenden Bedingungen gleichzeitig überprüft werden:
• mindestens ein Flugmanagementrechner des Luftfahrzeugs, ist gültig;
• mindestens eine Trägheits-Referenzzentrale des Luftfahrzeugs, unter Einbezug von aerodynamischen Daten, ist gültig;
• mindestens eine Funktion eines unterstützten Anflugmodus eines Multi-Modus-Empfängers zur Hilfe bei der Landung des Luftfahrzeugs, ist gültig; und
• ein Positionswert des Luftfahrzeugs weist eine niedrige Unsicherheit auf;
- eine dritte Anflugkategorie, wenn die folgenden Bedingungen gleichzeitig überprüft werden:
• mindestens ein Flugmanagementrechner des Luftfahrzeugs, ist gültig;
• mindestens eine Trägheits-Referenzzentrale des Luftfahrzeugs, unter Einbezug von aerodynamischen Daten, ist gültig;
• mindestens eine Funktion des unterstützten Anflugmodus eines Multi-Modus-Empfängers zur Hilfe bei der Landung des Luftfahrzeugs, ist gültig; und
• ein Positionswert des Luftfahrzeugs weist eine hohe Unsicherheit auf;
- eine vierte Anflugkategorie, wenn mindestens eine der folgenden Bedingungen A, B, C und D überprüft wird:
A/ zwei Flugmanagementrechner des Luftfahrzeugs, sind ungültig;
B/ zwei Multi-Modus-Empfänger zur Hilfe bei der Landung des Luftfahrzeugs, sind ungültig;
C/ drei Trägheits-Referenzzentralen des Luftfahrzeugs, unter Einbezug von aerodynamischen Daten, sind ungültig;
D/ Funktionen des unterstützten Anflugmodus von zwei Multi-Modus-Empfängern zur Hilfe bei der Landung des Luftfahrzeugs, sind ungültig; und
- Anzeigemittel (8), um auf einer Anzeigebildschirm (10) des Luftfahrzeugs die durch die zweiten Mittel (6) ausgewählte Anflugkategorie anzuzeigen, wobei eine Anflugkategorie die möglichen Anflugkategorien definiert.

4. Vorrichtung nach Anspruch 3,
**dadurch gekennzeichnet, dass** dieser Anzeigebildschirm (10) ein Hauptsteuerungsbildschirm des Luftfahrzeugs ist und dadurch, dass diese Anzeigemittel (8) die Anflugkategorie in einem Bereich (12) des Hauptsteuerungsbildschirms (10) anzeigen, der zur Anzeige einer Anflugkategorie bei einem Instrumentenanflug verwendet wird.

5. Luftfahrzeug,
**dadurch gekennzeichnet, dass** es eine Vorrichtung umfasst, die imstande ist, das Verfahren nach einem der Ansprüche 1 und 2 auszuführen.

## Claims

1. A method to assist the piloting of an aircraft in a non-precision approach during a landing phase, wherein the following series of successive steps is carried out interactively and automatically:
a) there is verified a plurality of conditions relating at least to the correct functioning of a plurality of the aircraft's equipments and to the integrity and precision of measurements of particular parameters, information coming from the said equipments and the said measurements being able to be used for the implementation of the said non-precision approach, said verified conditions comprising at least some of the following conditions:
• the correct functioning of each of the aircraft's two flight management computers;
• the correct functioning of a satellite positioning function of each of the aircraft's two multimode landing assistance receivers;
• the correct functioning of an assisted approach mode function of each of the aircraft's two multimode landing assistance receivers;
• the correct functioning of each of the aircraft's two multimode landing assistance receivers;
• the correct functioning of each of the aircraft's three inertial reference systems, integrating aerodynamic data;
• the correct functioning of an attitude and direction indicator of the aircraft;
• the integrity and precision of a position value of the aircraft;
• the uncertainty regarding this position value of the aircraft;
• the consistency between a position of the aircraft, calculated by a flight management computer of the aircraft, and a position of the aircraft received from a satellite positioning system; and
• the precision of an altitude value of the aircraft,
b) on the basis of the said verified conditions, an appropriate approach category is selected from a plurality of different approach categories, said plurality of different approach categories comprising at least some of the following categories:
- a first approach category is determined when the following conditions are verified simultaneously:
• two flight management computers of the aircraft are functioning correctly;
• satellite positioning functions of two multimode landing assistance receivers of the aircraft are functioning correctly;
• at least two inertial reference systems of the aircraft, integrating aerodynamic data, are functioning correctly;
• at least one assisted approach mode function of a multimode landing assistance receiver of the aircraft is functioning correctly;
• an altitude value of the aircraft has a precision that is greater than a predetermined value;
• the integrity and precision of a position value of the aircraft are achieved; and
• a position of the aircraft, calculated by a flight management computer of the aircraft, and a position of the aircraft, received from a satellite positioning system, are consistent;
- a second approach category is determined when the following conditions are verified simultaneously:
• at least one inertial reference system of the aircraft, integrating aerodynamic data, is functioning correctly;
• at least one assisted approach mode function of a multimode landing assistance receiver of the aircraft is functioning correctly; and
• a position value of the aircraft exhibits low uncertainty;
- a third approach category is determined when the following conditions are verified simultaneously:
• at least one flight management computer of the aircraft is functioning correctly;
• at least one inertial reference system of the aircraft, integrating aerodynamic data, is functioning correctly;
• at least one assisted approach mode function of a multimode landing assistance receiver of the aircraft is functioning correctly; and
• a position value of the aircraft exhibits high uncertainty;
- a fourth approach category is determined when at least one of the following conditions A, B, C and D is verified:
A/ two flight management computers of the aircraft are not functioning correctly;
B/ two multimode landing assistance receivers of the aircraft are not functioning correctly;
C/ three inertial reference systems of the aircraft, integrating aerodynamic data, are not functioning correctly;
D/ assisted approach mode functions of two multimode landing assistance receivers of the aircraft are not functioning correctly; and
c) the approach category thus selected is presented on a display screen (10).

2. The method as claimed in claim 1, wherein the conditions verified in step a) furthermore comprise the correct functioning of an automatic pilot of the aircraft.

3. A device to assist in the piloting of an aircraft in a non-precision approach during a landing phase, wherein it comprises:
- first means (4) of verifying a plurality of conditions relating to at least the correct functioning of a plurality of equipments of the aircraft, and to the integrity and precision of measurements of particular parameters, information coming from the said equipments and the said measurements being able to be used for the implementation of the said non-precision approach, said verified conditions comprising at least some of the following conditions:
• the correct functioning of each of the aircraft's two flight management computers;
• the correct functioning of a satellite positioning function of each of the aircraft's two multimode landing assistance receivers;
• the correct functioning of an assisted approach mode function of each of the aircraft's two multimode landing assistance receivers;
• the correct functioning of each of the aircraft's two multimode landing assistance receivers;
• the correct functioning of each of the aircraft's three inertial reference systems, integrating aerodynamic data;
• the correct functioning of an attitude and direction indicator of the aircraft;
• the integrity and precision of a position value of the aircraft;
• the uncertainty regarding this position value of the aircraft;
• the consistency between a position of the aircraft, calculated by a flight management computer of the aircraft, and a position of the aircraft received from a satellite positioning system; and
• the precision of an altitude value of the aircraft,
- second means (6) for selecting, on the basis of the said verified conditions, an appropriate approach category from among a plurality of different approach categories, said plurality of different approach categories comprising at least some of the following categories:
- a first approach category is determined when the following conditions are verified simultaneously:
• two flight management computers of the aircraft are functioning correctly;
• satellite positioning functions of two multimode landing assistance receivers of the aircraft are functioning correctly;
• at least two inertial reference systems of the aircraft, integrating aerodynamic data, are functioning correctly;
• at least one assisted approach mode function of a multimode landing assistance receiver of the aircraft is functioning correctly;
• an altitude value of the aircraft has a precision that is greater than a predetermined value;
• the integrity and precision of a position value of the aircraft are achieved; and
• a position of the aircraft, calculated by a flight management computer of the aircraft, and a position of the aircraft, received from a satellite positioning system, are consistent;
- a second approach category is determined when the following conditions are verified simultaneously:
• at least one inertial reference system of the aircraft, integrating aerodynamic data, is functioning correctly;
• at least one assisted approach mode function of a multimode landing assistance receiver of the aircraft is functioning correctly; and
• a position value of the aircraft exhibits low uncertainty.
- a third approach category is determined when the following conditions are verified simultaneously:
• at least one flight management computer of the aircraft is functioning correctly;
• at least one inertial reference system of the aircraft, integrating aerodynamic data, is functioning correctly;
• at least one assisted approach mode function of a multimode landing assistance receiver of the aircraft is functioning correctly; and
• a position value of the aircraft exhibits high uncertainty;
- a fourth approach category is determined when at least one of the following conditions A, B, C and D is verified:
A/ two flight management computers of the aircraft are not functioning correctly;
B/ two multimode landing assistance receivers of the aircraft are not functioning correctly;
C/ three inertial reference systems of the aircraft, integrating aerodynamic data, are not functioning correctly;
D/ assisted approach mode functions of two multimode landing assistance receivers of the aircraft are not functioning correctly; and
- display means (8) for presenting, on a display screen (10) of the aircraft, the approach category selected by the said second means (6).

4. The device as claimed in claim 3, wherein the said display screen (10) is a primary screen for piloting the aircraft and wherein the said display means (8) present the said approach category in a zone (12) of the said primary piloting screen (10), which is usually used for the display of an approach category during an instrument approach.

5. An aircraft, wherein it comprises a device capable of implementing the method as claimed in claim 1 and 2.
